# EUROPÄISCHE PATENTSCHRIFT

(11) **EP 1 461 535 B1**
(45) Veröffentlichungstag und Bekanntmachung des Hinweises auf die Patenterteilung: **26.03.2008**
(21) Anmeldenummer: 02758479.6
(22) Anmeldetag: 23.08.2002
(51) Int. Cl.: F16B 12/12, F16B 5/00

(54) **VERBINDUNGSEINRICHTUNG**
ASSEMBLING DEVICE
DISPOSITIF D'ASSEMBLAGE

(43) Veröffentlichungstag der Anmeldung: 29.09.2004
(73) Patentinhaber: Anton Hurtz GmbH & Co. KG, D-41334 Nettetal (DE)
(72) Erfinder: NAPP, Eckhard, 41379 Brüggen (DE)
(74) Vertreter: Draudt, Axel Hermann Christian
(86) Internationale Anmeldenummer: PCT/EP2002/009445
(87) Internationale Veröffentlichungsnummer: WO 2004/018883

(56) Entgegenhaltungen:
- EP-A- 0 399 371
- WO-A-86/03536
- CH-A- 357 531
- FR-A- 2 784 721

## Beschreibung

Die Erfindung betrifft eine Verbindungseinrichtung insbesondere zwischen zwei zusammenzufügenden ersten und zweiten Stäben, die an einer Verbindungsstelle zwei sich im wesentlichen ergänzende Positiv- und Negativprofile aufweisen, mit einem separaten Sperrriegel.

Eine derartige Verbindungseinrichtung ist aus der Druckschriften WO 86/03536 und CH 357 931 bekannt. Aus dieser Druckschrift ist ein verfahren entnehmbar, mit dem ein elastisches Element, dass wohl durchweg mit einer elastischen Dichtung bezeichnet werden kann, in einen Hohlraum einbringbar sein soll.

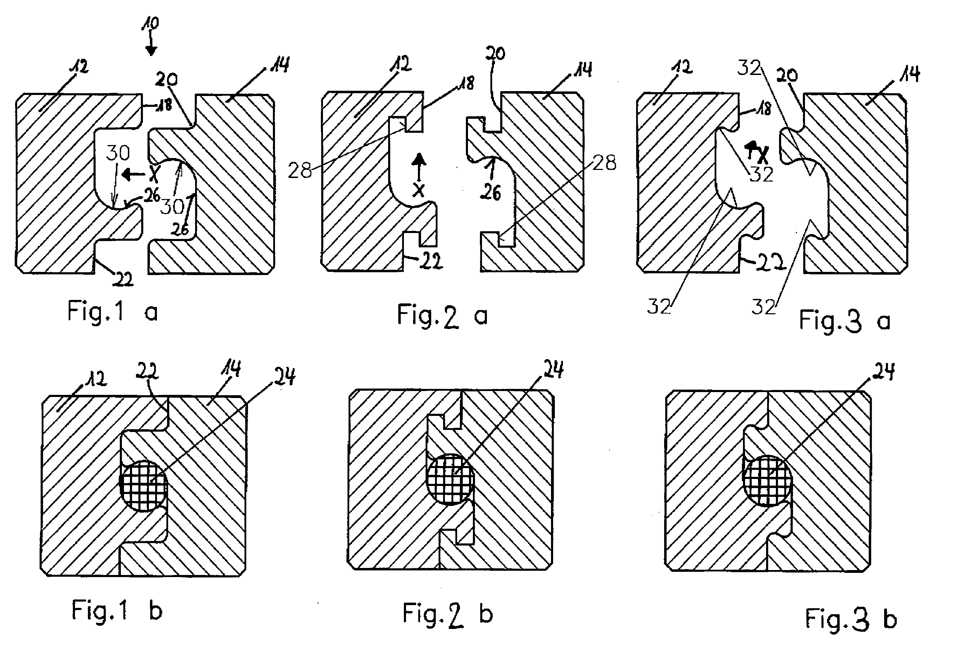

Wie sich aus der Beschreibung der Fig.3 von dieser Druckschrift auf der Seite 5, Zeilen 28 bis 37, bis Seite 6, Zeile 27 ergibt, bestehen die zu verbindenden Profile aus zwei Module 11 und 12 mit zwei entlang der Stirnseiten in Längsrichtung gesehen der länglichen beispielsweise Paneele versehene Profilierungen, siehe 11b und 12b gem. Fig.3, die im zusammengesetzten Zustand einen Hohlraum 13 bilden. In diesen Hohlraum 13 wird ein elastisches Element 14 als Dichtung zwischen diesen beiden Stirnseiten in Längsrichtung der Module 11 und 12 eingebracht.

Selbstverständlich bleibt diese Verbindung auch noch elastisch, kann also auf der Blattebene sowohl in horizontaler als auch in vertikaler und auch der dazwischen liegenden Richtungen durch Aufbringen von Kräften bewegt werden. Hier handelt es sich also keinesfalls um eine feste Verbindung von Profilstäben.

Dennoch ist der Oberbegriff derart abgefasst, dass die eventuellen Ähnlichkeiten bezüglich eines Sperrriegels dadurch abgedeckt sind.

Der Erfindung liegt daher die Aufgabe zugrunde, eine Verbindungseinrichtung der eingangs genannten Art anzugeben, die mit technisch einfachen Mitteln eine stets feste und stabile Verbindung gewährleistet und gleichzeitig ohne jegliche Hilfsmittel zusammengefügt werden kann.

Diese Aufgabe wird bei einer Verbindungseinrichtung der eingangs genannten Art erfindungsgemäß gelöst durch die Stäbe, die mit vorgegebenen Freiheitsgrad in ihre Verbindungsposition bringbar sind, zusammen mit dem Sperrriegel der sich beiderseits einer Trennfuge zwischen dem Positivprofil und dem Negativprofil erstreckt, einen Verbund aus drei Bestandteilen bilden, zwischen denen in der zur Richtung des Freiheitsgrades unmittelbar vor Erlangen der Verbindungsposition entgegengesetzten Richtung durch den Sperrriegel eine Beweglichkeitssperre besteht, wobei die Profilierung des Positivprofils und des Negativprofils im zusammengefügten Zustand eine zum Querschnittsprofil des Sperrriegels korrespondierende Ausnehmung festlegt, die die Trennfuge beiderseits überbrückt, und dass der Sperrriegel im zusammengefügten Zustand in zweite Hinterschnitte eingreift.

Diese erfindungsgemäße Verbindungseinrichtung ist sehr einfach zu handhaben, da lediglich die Positiv- und Negativprofile in der durch die Profilierung vorgegebenen Richtung zusammengefügt werden müssen. Nachdem diese Profile der Stabenden zusammengefügt worden sind, muss lediglich der entsprechende Sperrriegel in die vorhandene Ausnehmung eingeführt werden. Diese Tätigkeit ist sehr einfach und benötigt keinerlei Werkzeuge.

Durch das zunächst erfolgende Zusammenfügen der Positiv- und Negativprofile ergibt sich als erstes ein Formschluss. Erst das Einfügen oder Einführen des Sperrriegels führt dann zu einem Kraftschluss.

Gemäß einer vorteilhaften Weiterbildung der Erfindung ist es vorgesehen, dass die Positiv- und die Negativprofile gegenseitig mindestens einen ersten Hinterschnitt ergreifen. Die Formgebung der beiden Profile sorgt daher schon für einen gewissen Halt.

Eine besonders feste Verbindung ist dann gegeben, wenn sowohl die Positiv- und Negativprofile als auch der Sperrriegel in dritte Hinterschnitte eingreifen.

Zur Verhinderung einer Bewegung in Richtung des letzten Freiheitsgrades vor dem endgültigen Zusammenbau ist es ausreichend, wenn die Längsachse des Sperrriegels senkrecht zur Richtung des Freiheitsgrades verläuft. Dies gibt bereits eine sehr feste Verbindung auf Zugbeanspruchung entlang der Stablängsachsen.

Senkrecht zu diesen Stablängsachsen kann die Verbindung aber durchaus noch durch gegenseitiges Verschieben gelöst werden. Um dies auch noch auszuschließen, ist es vorteilhaft, wenn die Längsachse des Sperrriegels zur Richtung des Freiheitsgrades geneigt verläuft. Auch kann der Sperrriegel einschraubbar ausgestaltet sein.

Die bisher angegebenen Verbindungen betrafen allgemein Verbindungen entlang der Längsachse der zusammenzufügenden Stäbe. Es ist aber auch möglich, dass die Stäbe in einem stumpfen, rechten oder spitzen Winkel zueinander zusammengefügt sind.

Gemäß einer vorteilhaften Weiterbildung ist es vorgesehen, dass mindestens vier Stäbe zu einem Rahmen verbunden sind. Aufgrund dieser einfach zu erstellenden Verbindung können dann diese vier Stäbe in demontiertem Zustand unter minimalem Platzbedarf kostengünstig transportiert und am Bestimmungsort montiert werden.

Dies gilt insbesondere dann, wenn diese Rahmen groß sind. Für einige Anwendungen sind nämlich Rahmen notwendig, deren lange Seiten ca. 7 m lang sind. Da die kürzeren Seiten dabei ca. 3,50 m betragen, wäre für einen fertig montierten Rahmen ein großer und somit sehr kostspieliger Transportraum notwendig. Dieser Transportraum kann nunmehr erfindungsgemäß minimiert werden, da die einzelnen Rahmenseiten aufeinandergeschichtet transportiert werden können.

Am Bestimmungsort werden dann diese einzelnen Rahmenseiten entsprechend zusammengesetzt, und der dazugehörige Sperrriegel wird an jeder Ecke eingeschoben.

Dabei ist es je nach Wunsch möglich, dass der eingeschobene Sperrriegel wieder herausnehmbar oder unlösbar ist. Dies gilt aber auch für alle anderen oben bereits genannten Verbindungen.

Gemäß einer weiteren Ausgestaltung ist es vorgesehen, dass der Sperrriegel im Querschnitt rechteckförmig, kreisförmig, rautenförmig, achteckförmig, schwalbenschwanzförmig, ellipsenförmig oder kreuzförmig ist.

Wenn die zu verbindenden Stäbe ein geringes Gewicht, aber trotzdem eine hohe Festigkeit aufweisen sollen, ist es von Vorteil, wenn die Stäbe Hohlstäbe sind und angrenzend an die Verbindungen Verstärkungen aufweisen.

Besonders vorteilhaft ist dabei, wenn die Verstärkungen an den Hohlraum der Stäbe angepasste Hohl- oder Vollmaterialstäbe sind, die die Innenoberfläche der Stäbe vollflächig oder entlang mindestens zweier Linien in Längsrichtung berühren, wobei die Verstärkung entweder entlang der gesamten Stablänge oder entlang eines Teils der Stablänge angeordnet ist.

Üblicherweise werden die Positiv- und Negativprofile mit unterschiedlichen Werkzeugen, insbesondere formgebenden Werkzeugen hergestellt derart, dass sie sich im zusammengefügten Zustand im wesentlichen ergänzen. Eine besonders vorteilhafte kostenreduzierende Herstellung und auch Lagerhaltung ist aber dann gegeben, wenn das Positivprofil und das Negativprofil im zusammengefügten Zustand im Querschnitt zentralsymmetrisch sind. Derartige Profile können daher alle von dem gleichen Werkzeug insbesondere formgebenden Werkzeug hergestellt werden. Wenn man die Stäbe übereinander legt, so weisen die Stirnseiten eine identische Profilierung auf. Um diese Positiv- und Negativprofile ineinanderschieben zu können, muß lediglich ein auf dem anderen Stab liegender Stab um 180° gedreht und in die entsprechende Profilierung eingefügt werden.

Vorteilhaft ist es, wenn die Bauteile aus Metall, Holz oder Kunststoff oder aus einer Kombination mindestens zweier Materialarten bestehen. Selbstverständlich können auch andere Materialien verwandt werden.

Weitere Vorteile/Merkmale der Erfindung ergeben sich aus der folgenden Beschreibung mehrere Ausführungsbeispiele, sowie aus den Zeichnungen auf die Bezug genommen wird. Es zeigen:

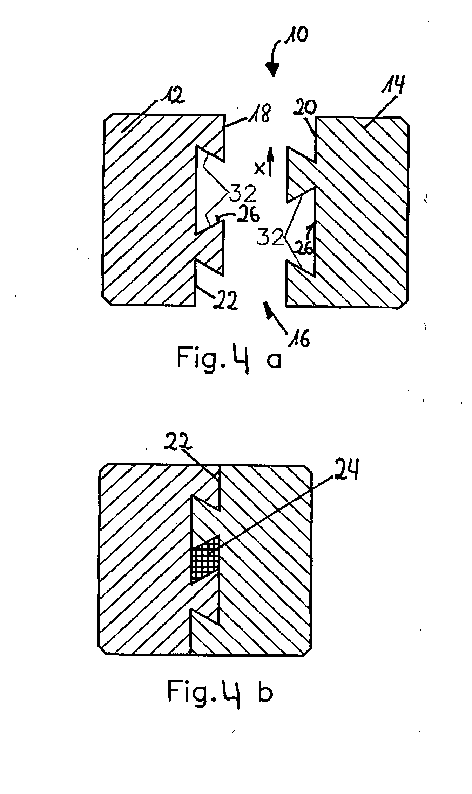

- Fig. 1a,b bis 4a,b: Profilierungen der Stirnseiten der Stäbe sowie zusammengefügte Verbindungseinrichtungen.

Anhand der Fig. 1a,b bis 4a,b werden nunmehr Verbindungseinrichtungen beschrieben, wobei gleichzeitig darauf hingewiesen wird, dass es auch eine Vielzahl von anderen Möglichkeiten der Erstellung dieser Verbindungseinrichtung gegeben sind.

In den Figuren sind Verbindungseinrichtungen 10 gezeigt, die zwischen zwei zusammenzufügenden ersten und zweiten Stäben 12 und 14 Anwendung finden.

Diese Stäbe 12,14 werden an einer Verbindungsstelle 16 zusammengefügt. Dazu weisen die Stäbe 12 und 14 zwei sich im wesentlichen ergänzende Positiv- 18 und Negativprofile 20 auf, die entlang einer Trennfuge 22 mit einem vorgegebenen Freiheitsgrad X in ihre Verbindungsposition bringbar sind. Dabei bedeutet dieser Freiheitsgrad X die letzte Bewegungsrichtung zur Erlangung eines Formschlusses zwischen den Positiv- 18 und Negativprofilen 20. Obwohl in den Figuren immer nur eine Pfeilrichtung für den Freiheitsgrad X verwandt wurde, versteht es sich von selbst, dass auch die entgegengesetzte Richtung zur Herstellung der Verbindung verwandt werden kann. Dieser Freiheitsgrad X kann entweder geradlinig, wie in den Figuren gezeigt, oder auch nicht geradlinig sein, zum Beispiel eine Kreis- oder Kurvenbewegung.

Zur Erläuterung wird in den Figuren immer angenommen, dass der erste Stab 12 in Ruhe verbleibt und der zweite Stab 14 zur Herstellung der Verbindung mit dem ersten Stab 12 bewegt wird.

Wenn nun diese beiden stäbe 12 und 14 in ihre Verbindungsposition gebracht worden sind, kann ein separater Sperrriegel 24 in eine Ausnehmung 26 eingeführt werden.

Diese Ausnehmung 26 wird durch die Profilierung des Positivprofils 18 und des Negativprofils 20 im zusammengefügten Zustand festgelegt und entspricht dem Querschnitt des Profils des Sperrriegels 24.

Der separate Sperrriegel 24 erstreckt sich beiderseits der Trennfuge 22 zwischen dem Positivprofil 18 und dem Negativprofil 20. Dabei bilden die Stäbe 12 und 14 zusammen mit dem Sperrriegel 24 einen Verbund aus drei Bestandteilen zwischen denen in der zur Richtung des Freiheitsgrades X unmittelbar vor Erlangen der Verbindungsposition entgegengesetzten Richtung durch den Sperrriegel 24 eine Beweglichkeitssperre besteht.

Durch das Zusammenfügen der beiden Stäbe 12 und 14 entsteht aufgrund der Profilierung zunächst ein Formschluss. Erst durch das Einführen des Sperrriegels 24 wird auch noch ein Kraftschluss erzielt.

Zur Verwirklichung dieser Form- und Kraftschlüsse gibt es drei Möglichkeiten. Zum einen können die Positiv- 18 und Negativprofile 20 so profiliert sein, dass sie gegenseitig mindestens einen ersten Hinterschnitt 28 ergreifen. Dies ist in der Figur 2 dargestellt.

Eine andere Möglichkeit besteht darin, dass der Sperrriegel 24 im zusammengefügten Zustand in zweite Hinterschnitte 30 eingreift. Ein derartiger Hinterschnitt ist in den Figur 1 gezeigt.

Schließlich besteht noch die Möglichkeit einer Kombination beider Hinterschnittmöglichkeiten. Die ist dadurch gegeben, dass sowohl die Positiv- 18 und Negativprofile 20 als auch der Sperrriegel 24 in dritte Hinterschnitte 32 eingreifen. Dies ist in den Fig.3 und 4 verwirklicht.

Eine Möglichkeit für den Verlauf des Sperrriegels 24 besteht darin, dass die Längsachse des Sperrriegels 24 senkrecht zur Richtung des Freiheitsgrades X verläuft. Er verläuft also senkrecht zur Zeichenblattebene der Fig.1 bis 4.

Dabei besteht allerdings noch die Möglichkeit, dass sich die drei Bestandteile der Verbindungseinrichtung 10 in Richtung senkrecht zur Blattebene noch bewegen und somit lösen lassen.

Falls dies nicht erwünscht ist, kann diesem dadurch begegnet werden, dass die Längsachse des Sperrriegels 24 zur Richtung des Freiheitsgrades X geneigt verläuft. Der Sperrriegel 24 verläuft daher zur Normalen der Blattebene geneigt.

Bei der ersten Möglichkeit verläuft der Sperrriegel 24 daher einachsig schräg, während er bei der zweiten Möglichkeit zweiachsig schräg verläuft.

Bisher wurden Verbindungen von Stäben 12 und 14 beschrieben, bei denen die Längsachsen der Stäbe 12 und 14 zusammen, fallen. Es ist aber auch möglich, dass die Stäbe 12 und 14 in einem stumpfen, rechten oder spitzen Winkel zueinander zusammengefügt werden können.

Der häufigste Winkel wird allerdings der rechte sein, um mit Hilfe der Stäbe 12 und 14 und der Verbindungseinrichtung 10 einen viereckigen Rahmen zu erstellen.

Dies ist besonders interessant, wenn der Rahmen groß ist. Es gibt beispielsweise sogar Rahmen mit Kantenlängen von ca. 7 m zu 3,50 m. Bisher war es üblich, derartig große Rahmen im fertig montierten Zustand zu versenden, oder am Bestimmungsort entsprechend mit Hilfe von Werkzeug, zum Beispiel Schweißgeräten, zusammenzusetzen.

Nunmehr ist es möglich, derartige Rahmen im demontierten Zustand zu versenden, wodurch Transportkosten eingespart werden können. Im Verhältnis zu früher werden nunmehr lediglich kleine Pakete versandt. Am Bestimmungsort werden dann die entsprechenden Stäbe 12 und 14 derart zusammengefügt, dass die Positiv- 18 und Negativprofile 20 ineinander greifen. Abschließend muss nunmehr nur noch in jede Ecke der Sperrriegel 24 eingeschoben werden. Selbstverständlich können damit auch noch andere räumliche Gebilde oder Konstruktionen montiert werden.

Diese eingeschobenen Sperrriegel 24 können entweder lösbar sich in der Ausnehmung 26 befinden. Es ist aber auch möglich, mit entsprechenden Mitteln diese sperrriegel 24 zu fixieren.

Die Ausgestaltung des Querschnitts des Sperrriegels 24 ist auf vielfache Weise möglich. So kann zum Beispiel der Sperrriegel 24 im Querschnitt kreisförmig (siehe Fig.1 bis 3), rautenförmig (siehe Fig.4), ausgebildet sein.

Wenn aus Gründen der Gewichtsreduzierung die Stäbe 12, 14 Hohlstäbe sind, die Verbindung, insbesondere die Stäbe 12,14 aber dennoch eine gewisse Festigkeit aufweisen sollen, ist es möglich, an bzw. in den Stäben 12, 14 an die Verbindungen angrenzend Verstärkungen vorzusehen. Dabei ist es möglich, dass die Verstärkungen an den Hohlraum der Stäbe 12 und 14 angepasste Hohl- oder Vollmaterialstäbe sind. Die Querschnittsform der angepassten Hohl- oder Vollmaterialstäbe kann dabei so gewählt werden, dass die angepassten Hohl- oder Vollmaterialstäbe die Innenoberfläche der Stäbe 12 und 14 vollflächig oder entlang mindestens zweier Linien in Längsrichtung berühren, wobei die Verstärkung entweder entlang der gesamten Stablänge oder entlang eines Teiles der Stablänge angeordnet ist. Dadurch kann insbesondere bei den oben bereits genannten großen Rahmen eine enorme Verwindungssteifigkeit und Biegesteifigkeit erzielt werden.

Allen Verbindungseinrichtungen sowie den 1. bis 4. Ausführungsbeispielen ist gemein, dass das Positivprofil 18 und das Negativprofil 20 im zusammengefügten zustand im Querschnitt zentralsymmetrisch sind. Das bedeutet, dass die beiden Profile übereinander gelegt identisch ausgebildet sind. Dies reduziert die Herstellungs- und Lagerkosten. Es ist aber auch möglich, unsymmetrische Profilierungen vorzusehen.

Es sind viele Materialarten denkbar, allerdings werden Metall, Holz oder Kunststoff oder eine Kombination mindestens zweier dieser Materialien bevorzugt.

### Bezugszeichenliste:

- 10: Verbindungseinrichtung
- 12: erster Stab
- 14: zweiter Stab
- 16: verbindungsstelle
- 18: Positivprofil
- 20: Negativprofil
- 22: Trennfuge
- 24: Sperriegel
- 26: Ausnehmung
- 28: erster Hinterschnitt
- 30: zweiter Hinterschnitt
- 32: dritter Hinterschnitt
- x: (Pfeil) Freiheitsgrad

## Patentansprüche

1. Verbindungseinrichtung (10) insbesondere zwischen zwei zusammenzufügenden ersten und zweiten Stäben (12,14), die an einer Verbindungsstelle (16) zwei sich im wesentlichen ergänzende Positiv- (18) und Negativprofile (20) aufweisen, mit einem separaten Sperriegel (24), **dadurch gekennzeichnet, daß** die Stäbe (12,14), die mit vorgegebenen Freiheitsgrad (X) in ihre Verbindungsposition bringbar sind, zusammen mit dem Sperriegel (24) der sich beiderseits einer Trennfuge (22) zwischen dem Positivprofil (18) und dem Negativprofil (20) erstreckt, einen Verbund aus drei Bestandteilen bilden, zwischen denen in der zur Richtung des Freiheitsgrades (X) unmittelbar vor Erlangen der Verbindungsposition entgegengesetzten Richtung durch den Sperriegel (24) eine Beweglichkeitssperre besteht, wobei die Profilierung des Positivprofils (18) und des Negativprofils (20) im zusammengefügten zustand eine zum Querschnittsprofil des Sperriegels (24) korrespondierende Ausnehmung (26) festlegt, die die Trennfuge (22) beiderseits überbrückt, und daß der Sperriegel (24) im zusammengefügten Zustand in zwei Hinterschnitte (30) eingreift.

2. Verbindungseinrichtung nach Anspruch 1, **dadurch gekennzeichnet, daß** die Positiv- (18) und die Negativprofile (20) gegenseitig mindestens einen ersten Hinterschnitt (28) ergreifen.

3. verbindungseinrichtung nach Anspruch 1, **dadurch gekennzeichnet, daß** sowohl die Positiv- (18) und Negativprofile (20) als auch der Sperriegel (24) in dritte Hinterschnitte (32) eingreifen.

4. Verbindungseinrichtung nach einem der Ansprüche 1 bis 3, **dadurch gekennzeichnet, daß** die Längsachse des Sperriegels (24) senkrecht zur Richtung des Freiheitsgrades (X) verläuft.

5. verbindungseinrichtung nach einem der Ansprüche 1 bis 3, **dadurch gekennzeichnet, daß** die Längsachse des Sperriegels (24) zur Richtung des Freiheitsgrades (X) geneigt verläuft.

6. Verbindungseinrichtung nach einem der Ansprüche 1 bis 5, **dadurch gekennzeichnet, daß** die Stäbe (12,14) in einem stumpfen, rechten oder spitzen winkel zueinander zusammengefügt sind.

7. Verbindungseinrichtung nach einem der Ansprüche 1 bis 6, **dadurch gekennzeichnet, daß** mindestens vier Stäbe (12,14) zu einem Rahmen verbunden sind.

8. Verbindungseinrichtung nach einem der Ansprüche 1 bis 7, **dadurch gekennzeichnet, daß** der eingeschobene Sperriegel (24) wieder herausnehmbar oder unlösbar ist.

9. Verbindungseinrichtung nach einem der Ansprüche 1 bis 8, **dadurch gekennzeichnet, daß** der Sperriegel (24) im Querschnitt rechteckförmig, kreisförmig, rautenförmig, achtförmig, schwalbenschwanzförmig, ellipsenförmig oder kreuzförmig ist.

10. Verbindungseinrichtung nach einem der Ansprüche 1 bis 9, **dadurch gekennzeichnet, daß** die Stäbe (12,14) Hohlstäbe sind und angrenzend an die Verbindungen Verstärkungen aufweisen.

11. verbindungseinrichtung nach Anspruch 10, **dadurch gekennzeichnet, daß** die Verstärkungen an den Hohlraum der Stäbe (12,14) angepaßte Hohl- oder Vollmaterialstäbe sind, die die Innenoberfläche der Stäbe (12,14) vollflächig oder entlang mindestens zweier Linien in Längsrichtung berühren, wobei die Verstärkung entweder entlang der gesamten Stablänge oder entlang eines Teils der Stablänge angeordnet ist.

12. verbindungseinrichtung nach einem der Ansprüche 1 bis 11, **dadurch gekennzeichnet, daß** das Positivprofil (18) und das Negativprofil (20) im zusammengefügten Zustand im Querschnitt zentralsymmetrisch sind.

13. Verbindungseinrichtung nach einem der Ansprüche 1 bis 12, **dadurch gekennzeichnet, daß** die Bauteile aus Metall, Holz oder Kunststoff oder aus einer Kombination mindestens zweier Materialarten bestehen.

## Claims

1. Connecting device (10) in particular between two first and second rods (12, 14) which are to be assembled together and comprise at a connection point (16) two substantially complementary positive (18) and negative (20) profiles, having a separate locking bar (24), **characterised in that** the rods (12, 14), which can be moved to their connecting position with a predetermined degree of freedom (X), form together with the locking bar (24), which extends on both sides of an interstice (22) between the positive profile (18) and the negative profile (20), a composite of three components between which a lock against movement is created by the locking bar (24) in the direction opposite the direction of the degree of freedom (X) immediately prior to reaching the connecting position, wherein the shape of the positive profile (18) and of the negative profile (20) in the assembled state defines a recess (26) which corresponds to the cross-sectional profile of the locking bar (24) and bridges over both sides of the interstice (22), and **in that** in the assembled state the locking bar (24) engages into two undercuts (30).

2. Connecting device as claimed in Claim 1, **characterised in that** the positive (18) and negative (20) profiles mutually grip at least one first undercut (28).

3. Connecting device as claimed in Claim 1, **characterised in that** the positive (18) and negative (20) profiles and also the locking bar (24) engage into third undercuts (32).

4. Connecting device as claimed in any one of Claims 1 to 3, **characterised in that** the longitudinal axis of the locking bar (24) extends perpendicularly to the direction of the degree of freedom (X).

5. Connecting device as claimed in any one of Claims 1 to 3, **characterised in that** the longitudinal axis of the locking bar (24) extends in an inclined manner with respect to the direction of the degree of freedom (X).

6. Connecting device as claimed in any one of Claims 1 to 5, **characterised in that** the rods (12, 14) are assembled together at an obtuse, right or acute angle with respect to each other.

7. Connecting device as claimed in any one of Claims 1 to 6, **characterised in that** at least four rods (12, 14) are connected to form a frame.

8. Connecting device as claimed in any one of Claims 1 to 7, **characterised in that** the inserted locking bar (24) is removable or non-detachable.

9. Connecting device as claimed in any one of Claims 1 to 8, **characterised in that** the cross-section of the locking bar (24) is rectangular, circular, diamond-shaped, in the form of the figure 8, dovetail-shaped, elliptical or cruciform.

10. Connecting device as claimed in any one of Claims 1 to 9, **characterised in that** the rods (12, 14) are hollow rods and comprise reinforcements adjacent the connections.

11. Connecting device as claimed in Claim 10, **characterised in that** the reinforcements are hollow or solid material rods which are adapted to the hollow space of the rods (12, 14) and contact the inner surface of the rods (12, 14) over their entire surface or along at least two lines in the longitudinal direction, wherein the reinforcement is disposed either along the entire rod length or along a portion of the rod length.

12. Connecting device as claimed in any one of Claims 1 to 11, **characterised in that** in the assembled state the positive profile (18) and the negative profile (20) are centrally symmetrical in cross-section.

13. Connecting device as claimed in any one of Claims 1 to 12, **characterised in that** the components consist of metal, wood or synthetic material or of a combination of at least two types of material.

## Revendications

1. Dispositif d'assemblage (10), en particulier entre deux première et seconde barres à assembler (12, 14) qui présentent au niveau d'un point d'assemblage (16) deux profils positif (18) et négatif (20) qui se complètent globalement, avec un verrou de blocage séparé (24),
**caractérisé en ce que** les barres (12, 14), qui sont aptes à être amenées dans leur position d'assemblage avec un degré de liberté (X) prédéfini, forment avec le verrou de blocage (24) qui s'étend des deux côtés d'un joint de séparation (22) entre le profil positif (18) et le profil négatif (20) un ensemble de trois éléments entre lesquels il y a grâce au verrou de blocage (24) un blocage dans le sens opposé au sens du degré de liberté (X) juste avant que la position d'assemblage soit atteinte, la forme du profil positif (18) et du profil négatif (20), en position montée, définissant une cavité (26) qui correspond au profil en section transversale du verrou de blocage (24) et qui couvre le joint de séparation (22) des deux côtés, et **en ce que** le verrou de blocage (24), en position montée, vient en prise dans deux contre-dépouilles (30).

2. Dispositif d'assemblage selon la revendication 1, **caractérisé en ce que** les profils positif (18) et négatif (20) s'interpénètrent au niveau d'au moins une première contre-dépouille (28).

3. Dispositif d'assemblage selon la revendication 1, **caractérisé en ce que** non seulement les profils positif (18) et négatif (20), mais aussi le verrou de blocage (24) viennent en prise dans des troisièmes contre-dépouilles (32).

4. Dispositif d'assemblage selon l'une des revendications 1 à 3, **caractérisé en ce que** l'axe longitudinal du verrou de blocage (24) est perpendiculaire au sens du degré de liberté (X).

5. Dispositif d'assemblage selon l'une des revendications 1 à 3, **caractérisé en ce que** l'axe longitudinal du verrou de blocage (24) est incliné par rapport au sens du degré de liberté (X).

6. Dispositif d'assemblage selon l'une des revendications 1 à 5, **caractérisé en ce que** les barres (12, 14) sont assemblées en définissant un angle obtus, droit ou aigu.

7. Dispositif d'assemblage selon l'une des revendications 1 à 6, **caractérisé en ce qu'**au moins quatre barres (12, 14) sont reliées pour former un cadre.

8. Dispositif d'assemblage selon l'une des revendications 1 à 7, **caractérisé en ce que** le verrou de blocage (24), une fois inséré, est apte à être enlevé ou est non amovible.

9. Dispositif d'assemblage selon l'une des revendications 1 à 8, **caractérisé en ce que** le verrou de blocage (24) a une section transversale rectangulaire, ronde, en forme de losange, en forme de huit, en forme de queue d'aronde, ellipsoïdale ou en croix.

10. Dispositif d'assemblage selon l'une des revendications 1 à 9, **caractérisé en ce que** les barres (12, 14) sont des barres creuses et présentent des renforcements près des assemblages.

11. Dispositif d'assemblage selon la revendication 10, **caractérisé en ce que** les renforcements sont constitués par des barres creuses ou pleines qui sont adaptées à la partie creuse des barres (12, 14) et qui touchent la surface intérieure des barres (12, 14) sur toute leur surface ou le long d'au moins deux lignes dans le sens longitudinal, le renforcement étant disposé soit sur toute la longueur des barres, soit sur une partie de la longueur des barres.

12. Dispositif d'assemblage selon l'une des revendications 1 à 11, **caractérisé en ce que** le profil positif (18) et le profil négatif (20), en position assemblée, présentent une symétrie centrale en coupe transversale.

13. Dispositif d'assemblage selon l'une des revendications 1 à 12, **caractérisé en ce que** les éléments de construction se composent de métal, de bois ou de matière plastique ou d'une combinaison d'au moins deux types de matériau.
